# EUROPÄISCHE PATENTSCHRIFT

(11) **EP 0 964 795 B1**
(45) Veröffentlichungstag und Bekanntmachung des Hinweises auf die Patenterteilung: **24.07.2002**
(21) Anmeldenummer: 98912284.1
(22) Anmeldetag: 20.02.1998
(51) Int. Cl.: B60B 17/00

(54) **GUMMIGEFEDERTES SCHIENENRAD**
RESILIENT WHEEL FOR RAIL VEHICLES
ROUE ELASTIQUE POUR VEHICULES SUR RAILS

(30) Priorität: 04.03.1997 DE 19708553
(43) Veröffentlichungstag der Anmeldung: 22.12.1999
(73) Patentinhaber: GMT Gummi-Metall-Technik Gmbh, 77815 Bühl (DE)
(72) Erfinder: ENGSTLER, Gerhard, D-77815 Bühl (DE)
(74) Vertreter: Miller, Andreas, Dr.
(86) Internationale Anmeldenummer: DE9800510
(87) Internationale Veröffentlichungsnummer: WO9839167

(56) Entgegenhaltungen:
- CH-A- 330 360
- DE-A- 1 957 382
- DE-A- 2 142 774
- DE-B- 1 104 986
- DE-B- 1 133 750
- DE-C- 826 755
- US-A- 2 175 118

## Beschreibung

Die Erfindung betrifft ein gummigefedertes mehrteiliges Schienenrad mit einem Radkranz und einer Radnabe, sowie einem dazwischen gefügten lösbaren Federungseinrichtung.

Derartige Räder werden häufig bei Straßenbahnen eingesetzt, wenn die Schallabstrahlung minimiert oder aus sonstigen Gründen die ungefederten Massen reduziert werden sollen.

Bei bekannten gummigefederten Schienenrädern der vorgenannten Art sind Gummiplatten parallel zueinander angeordnet (DE-PS 19 57 382, DE-PS 21 42 774). Hierbei stehen die Gummiplatten durch die durch Schrauben aufgebrachte Vorspannung unter einer Druckbeanspruchung, werden aber im übrigen fast ausschließlich auf Schub beansprucht. Durch diese kombinierte Beanspruchung ergeben sich sehr hohe Federwege und eine hohe Walkarbeit. Die Montage ist aufwendig.

In ähnlicher Weise wird gemäß der DE 43 00 552 A1 versucht, Druck- und Schubspannungen in einem gummigefederten Schienenrad zu beherrschen. Das dies nicht immer gelingt, zeigt ein auf der Radnabe vorgesehener elastischer Anschlag, der bei Überschreiten der vorgegebenen Federwege der V-förmig angeordneten Gummischeiben, den Radkranz in seiner Relativbewegung zur Radnabe abfedernd auffängt. Die Montage der einzelnen Gummi-Scheiben und die Fertigung exakter Schrägflächen an den Teilen des Schienenrades ist aufwendig.

Aus der CH 156 916, der DE 24 06 206 C3 und der DE 33 28 321 C2 sind Federelemente bekannt, die so zwischen Radnabe und Radkranz eingebaut sind, daß sie im wesentlichen nur auf Druck beansprucht werden. Die Montage der Gummiteile ist aufwendig, da ein Verkanten und Abquetschen der Gummiringe zu vermeiden ist. Die Elastizität der Räder naturgemäß gering, wobei allerdings das Verhältnis von Achslast zu Federweg und/oder Härte des Gummis noch eine Rolle spielt.

Mit der DE 44 30 342 A1 wurde ein gummigefedertes Rad vorgeschlagen, bei dem eine Achslast dazu führt, daß die vorgespannten Gummielemente, paarweise v-förmig oder summarisch kegelstumpfförmig ausgebildete Gummischeiben zwischen Radnabe und Radkranz, entlastet werden, während sie zugleich im Zenitbereich stärker belastet werden, d.h. die Gummielemente werden im Zenitbereich unter Druck gesetzt.

Ein gummigefedertes Schienenrad gemäss dem Oberbegriff des Anspruchs 1 ist aus DE-A-1 104 986 bekannt.

In allen Fällen nach dem Stand der Technik ist das aus Radkranz und Radnabe bestehende Schienenrad mit den einzufügenden elastischen Teilen schwierig zusammenzubauen, weil die Anordnung der Gummischeiben oder sonstwie gestaltete Gummiteile exakt symmetrisch sein muß. Gummiteile, insbesondere auf Druck beanspruchte Teile, werden so hoher Walkarbeit ausgesetzt, daß sich nach kurzer Zeit eine erhebliche Wärme entwickeln und nach entsprechender Belastung (Achslast gemessen in Tonnen mal Kilometer) geschädigt oder zerstört werden.

Von daher ergibt sich bei der vorliegenden Erfindung das Problem einer schnellen und einfachen Montage und Demontage auszutauschender Federungseinrichtungen, wobei die Federungseinrichtungen durch entsprechende Gestaltung möglichst schonend beansprucht werden sollen.

Das Problem wird erfindungsgemäß durch die Merkmale des Anspruches 1 gelöst. Weiterbildungen der Erfindung sind in den Unteransprüchen enthalten.

Das erfindungsgemäße gummigefederte Schienenrad besteht im wesentlichen aus dem Radkranz und der Radnabe mit einer zwischengefügten Federungseinrichtung, umfassend eine Mittelscheibe oder einen Innenring und zwei äußeren Scheiben oder Ringbleche, zwischen denen ein Elastomerring oder Gummiring befestigt ist.
Vorzugsweise sind die Scheiben konzentrisch und planparallel zueinander angeordnet, können jedoch auch mit ihren Oberflächen einen Winkel zueinander bilden, wie dies beim Stand der Technik der Fall ist.
Vorzugsweise bildet eine komplette Federungseinrichtung ein zu einer Mittelebene auf die Mittelscheibe, orthogonal zur Radachse oder Achse der Radnabe, spiegelsymmetrisches System. Dies schließt eine gleiche Form der beiden Außenscheiben und der zwischen der Mittelscheibe und den Außenscheiben angeordneten Elastomerringe ein. Wichtig im Zusammenhang mit der Erfindung ist, daß die Federungseinrichtung als solche komplett oder einstückig zwischen Radnabe und Radkranz eingebaut und soweit von der Bauart des Schienenfahrzeuges, beispielsweise einer Straßenbahn, her sinnvoll oder gefordert, unter Vorspannung montierbar ist.
In einer bevorzugten Ausführungsform sind die Elastomerringe kraftschlüssig, also beispielsweise durch Vulkanisieren oder Kleben mittels geeignetem Kleber, an den Scheiben, in der Regel Stahlscheiben, befestigt. Dazu eignen sich sowohl Gummimischungen als auch spezielle - für sich bekannte - Kunststoffmischungen.
Die Ringe sehen im Schnitt so aus, als sei die Federungseinrichtung V-förmig ausgerichtet. Durch diese Ausrichtung ist es möglich, die Elastomerringe gegenüber dem Innenring oder der Mittelscheibe unter Vorspannung zu setzen, indem die Außenringe in dem Radkranz an vordefinierter Stelle verschraubt werden. Andererseits kann die Endmontage auch darin bestehen, daß zunächst die Außenringe am Radkranz und dann der Innenring oder die Mittelscheibe mit Hilfe geeigneter Vorrichtungen auf die Radnabe montiert wird.
Sowohl die Außenscheiben an dem Radkranz als auch die Mittelscheibe an der Radnabe können dabei mittels für sich bekannter Schraubverbindungen die Federungseinrichtung unter Vorspannung setzen
Die so aufgebaute und montierte Federungseinrichtung läßt sich leicht vorfertigen und nach Demontage des Radkranzes von der Nabe leicht abziehen und durch eine andere Federungseinrichtung ersetzen.

Zu beachten ist das Kriechverhalten der Elastomerringe je nach Art des Materials und ihrer Form und Belastung. Bei überwiegender Belastung durch Schubkräfte sind vorwiegend sehr setzarme Gummimischungen oder äquivalente Kunststoffe zu verwenden.

Die erfindungsgemäßen Schienenräder beanspruchen die Elastomerringe fast ausschließlich auf Schub, so daß die Federungseinrichtung eine hohe radiale Einfederung aufnimmt, ohne in den kritischen Belastungsbereich des Elastomers zu gelangen. Dies insbesondere dann, wenn der Durchmesser der Elastomerringe zu den Außenscheiben hin ansteigt, so daß der Mittelring oder die Mittelscheibe bei Belastung der Radachse radial gegen die Reaktionskraft der Elastomerringe in den Radkranz eintaucht.

Wenn die Gummielemente oder Elastomerringe spiegelsymmetrisch zur Mittelebene der Mittelscheibe aufgebaut sind, ist mit eine entsprechend symmetrische hohe Achsialsteifigkeit des Rades gegeben, insbesondere dann wenn die Mittelebene die Breite des Radkranzes halbiert.

Eine solche Federungseinrichtung kann durch Variation der Scheibendurchmesser auf alle Radkranzdurchmesser und Nabendurchmesser angepaßt werden. In gleicher Weise ist es möglich in Abänderung der, im Querschnitt V-förmigen, vulkanisierten Elastomerringe von planparallelen Scheiben abzugehen und auf leicht V-förmige Scheiben zu wechseln, sofern mit entsprechenden Achsialbelastungen zu rechnen ist oder eine Druckbelastung der Elastomerringe erwünscht ist.

Im folgenden soll die Erfindung in einer Zeichnung anhand einiger schematischer Ausführungsbeispiele näher erläutert werden. Es zeigen:
- Figur 1a,b: ein Schienenrad mit zwei unterschiedlichen Elastomertypen;
- Figuren 2 -11: Radkränze mit unterschiedlichen Anordnungen von Elastomerringen in den Federelementen.

Im folgenden sind gleiche oder ähnliche Teile mit identischen Bezugsziffern versehen; lediglich die Teile der Federungseinrichtungen haben unterschiedliche Bezugsziffern.

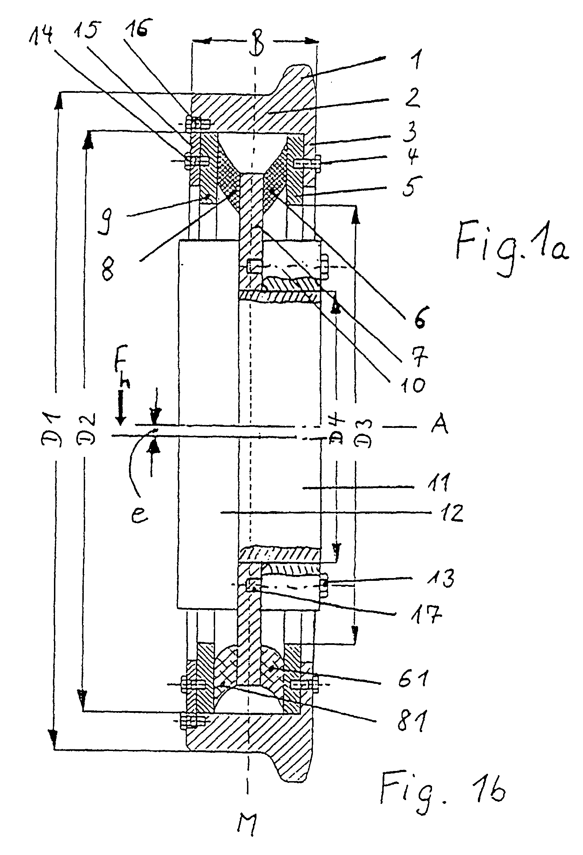

Fig. 1a und 1b zeigen gemeinsam ein Schienerad gemäß der Erfindung mit der Radachse A und den Nabenteilen 11, 12. Die Bohrung für die Fahrzeugachse und die übliche Befestigung des Radkranzes, hier via Mittelscheibe 7, gegen achsiale und radiale Verschiebung sind der Übersichtlichkeit wegen ausgespart. Lediglich die Druckstücke 10 und deren formschlüssige Verbindung mit der Mittelscheibe 7 durch die Verschraubung 13 sind dargestellt.
Ein Radkranz 2 der Breite B mit Laufdurchmesser D1 weist einen Spurkranz 1 und Stützflansch 3 auf; er ist durch die Federungseinrichtung 5,6,7,8,9 mit der Nabe des Rades verbunden. Die Federungseinrichtung ist einerseits über die Außenscheibe 5 mit Schrauben 4 am Stützflansch 3 verschraubt, während die zweite Außenscheibe 9 mittels Deckscheibe 15 und die Verschraubungen 14,16 an dem Radkranz 2 fixiert ist.
Zwischen den Außenscheiben 5, 9 und der auf der Nabe 11 mit Durchmesser D4 gehaltenen Mittelscheibe 7 sind an die Scheiben anvulkanisierte Kunststoffringe 6, 8 angeordnet.
Die Ringe haben Durchmesser die von der Mittelscheibe 7 zu den durch die Durchmesser D3 und D2 gekennzeichneten Außenscheiben 5 und 9 aus Stahl ansteigen
Das Federelement ist spiegelsymmetrisch zur Mittelebene M des Mittelringes 7 und mittig zur Breite B des Radkranzes angeordnet und aufgebaut. Die kraftschlüssige Verbindung der Nabe zum Radkranz übernehmen die Elastomerringe 6 und 8, deren Federeigenschaft die ungefederten Massen des Fahrzeuges auf die Radkränze beschränkt.
Fig. 1b zeigt eine gleichförmig aufgebaute Federungseinrichtung, jedoch mit anvulkanisierten Gummiringen 61, 61, die dieselben federnden Eigenschaften wie die Ringe 6, 8 haben.
Bei Belastung mit der halben Achslast Fh federt die Achse A um den Betrag e elastisch in den Radkranz ein und deformiert dabei die in Gebrauchslage am unteren Umkehrpunkt dargestellten Elastomerringe 61 und 81, während die Ringe 6, 8 im Zenit des Rades entlastet werden. Der Vertikalversatz der Mittelscheibe hängt dabei sowohl von der Federsteifigkeit der Elastomerringe als auch der horizontalen Verspann oder deren Deformation bei der Montage ab, wie der Fachmann leicht erkennt. Durch diese Variationen kann auch der Grad der jeweils herrschenden Zug- und Druckspannungen in den Ringen bestimmt werden.

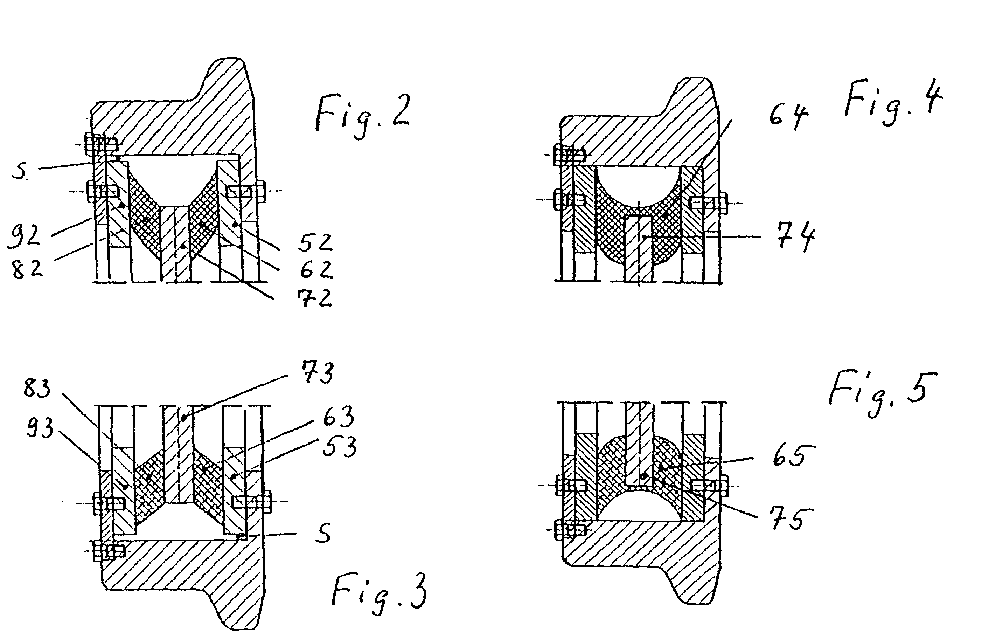

Die Figuren 2, 3 zeigen in ähnlicher Weise geklebte Kunststoffringe 62, 82 zwischen den Stahlscheiben 52, 72,92 bzw. Gummiringe 63, 83 zwischen den Scheiben 53, 73, 93 anderer Schienenräder.
Für die Erfindung ist es von untergeordneter Rolle ob die Außenscheiben Spiel s zu den Radkränzen haben oder nicht. Das Spiel erleichtert den Austauschbau der Federungseinrichtungen mit variablen Radkränzen.

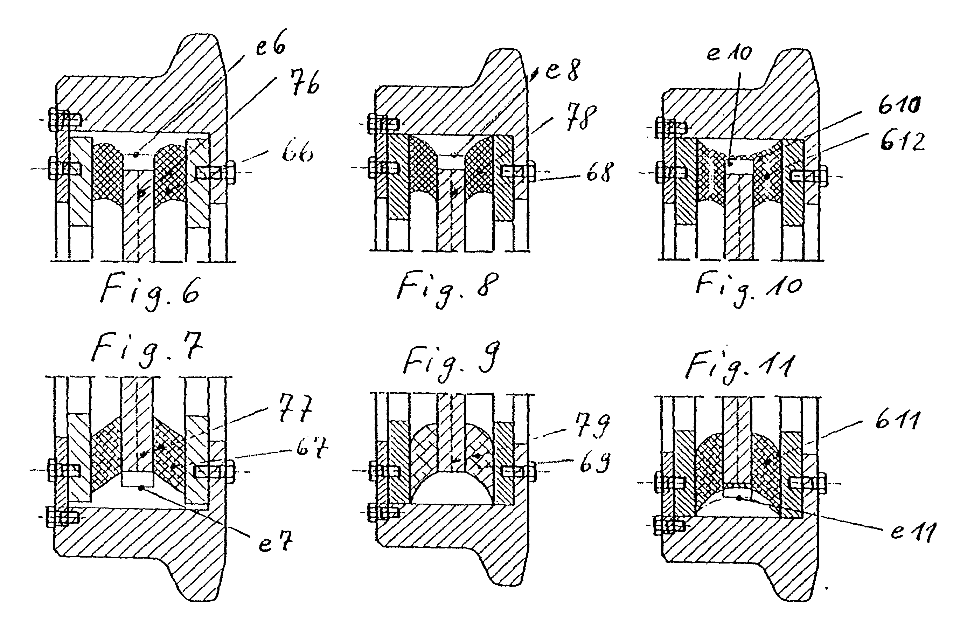

Die Figuren 4 bzw. 5 zeigen Elastomerringe aus Kunststoff 64 bzw. Gummi 65, bei denen jeweils die beiden Ringe als einstückiger Ring die Mittelscheiben 74, 75 umschließen.
Dieselbe Situation ist noch in den Fig. 10 und 11 dargestellt, wobei in beiden Fällen das elastische Spiel e10 bzw. e11 der Elastomerringe 610 bzw. 611 zeichnerisch angegeben ist. Mit 612 ist ein Einschluß dargestellt mit dem die Ringe erforderlichenfalls weicher oder härter eingestellt werden können.

Die Fig. 6 bis 9 zeigen ebenfalls verschiedene Typen der Ausbildung der Ringe 66 67, 68, 69 relativ zu ihrer Anordnung an den Mittelscheiben 76, 77, 78, 79 und deren Spiel e6, e7, e8.

## Patentansprüche

1. Gummigefedertes mehrteiliges Schienenrad mit
einem Radkranz (2) und einer Radnabe (11,12) sowie einer dazwischen angeordneten konzentrischen Federungseinrichtung, die aus einer Mittelscheibe (7), zwei im Außendurchmesser größeren Außenscheiben (5,9) und zwei jeweils zwischen den Außenscheiben (5,9) und den gegenüberliegenden Seiten der Mittelscheibe (7) angeordneten Elastomer-Ringen (6,8) besteht, wobei die Federungseinrichtung lösbar über die Außenscheiben (5,9) an dem Radkranz (2) befestigt ist,
**dadurch gekennzeichnet, dass**
die Federungseinrichtung als separates Element komplett vorgefertigt ist, das lösbar über die Mittelscheibe (7) an der Radnabe (11,12) befestigt ist.

2. Schienenrad nach Anspruch 1, **dadurch gekennzeichnet, dass** die Elastomer-Ringe (6,8) durch Kleben oder Vulkanisieren mit den Außenscheiben (5,9) verbunden sind.

3. Schienenrad nach Anspruch 1 oder 2, **dadurch gekennzeichnet, dass** der Außendurchmesser der Elastomer-Ringe (6,8) von der Mittelscheibe (7) zu den Außenscheiben (5,9) ansteigt.

4. Schienenrad nach einem der Ansprüche 1 bis 3, **dadurch gekennzeichnet, dass** die Außenscheiben (5,9) und die Elastomer-Ringe (6,8) spiegelsymmetrisch zu einer Mittelebene (M) der Mittelscheibe (7) angeordnet sind.

5. Schienenrad nach Anspruch 4, **dadurch gekennzeichnet, dass** die Mittelebene (M) der Mittelscheibe (7) die Breite (B) des Radkranzes (2) halbiert.

6. Schienenrad nach einem der Ansprüche 1 bis 5, **dadurch gekennzeichnet, dass** die Elastomer-Ringe (6,8) den äußeren Rand der Mittelscheibe (7) umschließen.

7. Schienenrad nach einem der Ansprüche 1 bis 6, **dadurch gekennzeichnet, dass** das Material für die Elastomer-Ringe (6,8) aus einer setzarmen Gummi- oder Kunststoffmischung besteht.

## Claims

1. Rubber-sprung multi-piece wheel for rails having a rim (2) and a hub (11, 12) and a concentric suspension means arranged there between comprising a centre disc (7), two outer discs (5, 9) of larger outside diameter and two elastomer rings (6, 8) arranged between respective ones of the outside discs (5, 9) and the opposing sides of the centre disc (7), the suspension means being detachably fastened to the rim (2) of the wheel via the outer discs (5, 9),
**characterised in that**
the suspension means is prefabricated in its entirety as a separate member which is detachably fastened to the hub (11, 12) of the wheel via the centre disc (7).

2. Wheel for rails according to claim 1, **characterised in that** the elastomer rings (6, 8) are connected to the outer discs (5, 9) by bonding or vulcanising.

3. Wheel for rails according to claim 1 or 2, **characterised in that** the outside diameter of the elastomer rings (6, 8) increases from the centre disc (7) to the outer discs (5, 9).

4. Wheel for rails according to any one of claims 1 to 3, **characterised in that** the outer discs (5, 9) and the elastomer rings (6, 8) are arranged as mirror-images of one another about a centre plane (M) of the centre disc (7).

5. Wheel for rails according to claim 4, **characterised in that** the centre plane (M) of the centre disc (7) halves the width (B) of the rim (2) of the wheel.

6. Wheel for rails according to any one of claims 1 to 5, **characterised in that** the elastomer rings (6, 8) enclose the outer edge of the centre disc (7).

7. Wheel for rails according to any one of claims 1 to 6, **characterised in that** the material for the elastomer rings (6, 8) comprises a low stress-set rubber or plastics mixture.

## Revendications

1. Roue pour rail en plusieurs parties à suspension en caoutchouc comportant une jante (2) de la roue et un moyeu (11, 12) ainsi qu'un dispositif concentrique de suspension, disposé entre eux, lequel est constitué d'un disque central (7), de deux disques extérieurs (5, 9) de diamètre plus grand et de deux anneaux en élastomère (6, 8) disposés respectivement entre les disques extérieurs (5, 9) et les faces opposées du disque central (7), le dispositif de suspension étant fixé à la jante (2) de la roue, de manière amovible, par les disques extérieurs (5, 9),
**caractérisée en ce que** le dispositif de suspension est préfabriqué complet en tant qu'élément séparé, qui est fixé au moyeu (11, 12) de la roue, de manière amovible, par le disque central (7).

2. Roue pour rail selon la revendication 1, **caractérisée en ce que** les anneaux en élastomère (6, 8) sont reliés aux disques extérieurs (5, 9), par collage ou vulcanisation.

3. Roue pour rail selon la revendication 1 ou 2, **caractérisée en ce que** le diamètre extérieur des anneaux en élastomère (6, 8) augmente du disque central (7) vers les disques extérieurs (5, 9).

4. Roue pour rail selon l'une des revendications 1 à 3, **caractérisée en ce que** les disques extérieurs (5, 9) et les anneaux en élastomère (6, 8) sont disposés dans une symétrie en miroir par rapport à un plan médian (M) du disque central (7).

5. Roue pour rail selon la revendication 4, **caractérisée en ce que** le plan médian (M) du disque central (7) divise par deux la largeur (B) de la jante (2) de la roue.

6. Roue pour rail selon l'une des revendications 1 à 5, **caractérisée en ce que** les anneaux en élastomère (6, 8) entourent le bord extérieur du disque central (7).

7. Roue pour rail selon l'une des revendications 1 à 6, **caractérisée en ce que** la matière des anneaux en élastomère (6, 8) est constituée d'un mélange de caoutchouc ou de matière plastique présentant un faible affaissement.
